# EUROPÄISCHE PATENTSCHRIFT

(11) **EP 2 980 102 B1**
(45) Veröffentlichungstag und Bekanntmachung des Hinweises auf die Patenterteilung: **22.07.2020**
(21) Anmeldenummer: 15172649.4
(22) Anmeldetag: 18.06.2015
(51) Int. Cl.: C08B 30/08, C08B 30/12, C08B 30/16

(54) **VORRICHTUNG UND VERFAHREN ZUR INSBESONDERE KONTINUIERLICHEN THERMISCHEN BEHANDLUNG EINER STÄRKESUSPENSION**
DEVICE AND METHOD ESPECIALLY FOR THE CONTINUOUS THERMAL TREATMENT OF A STARCH SUSPENSION
DISPOSITIF ET PROCEDE DESTINES AU TRAITEMENT THERMIQUE NOTAMMENT CONTINU D'UNE SUSPENSION D'AMIDON

(30) Priorität: 29.07.2014 AT 505402014
(43) Veröffentlichungstag der Anmeldung: 03.02.2016
(73) Patentinhaber: GAW technologies GmbH, 8020 Graz (AT)
(72) Erfinder: Schmölzer, Wolfgang, 8152 Stallhofen (AT)
(74) Vertreter: Wirnsberger, Gernot

(56) Entgegenhaltungen:
- WO-A1-2006/024242
- GB-A- 2 146 346
- US-A- 2 989 425

## Beschreibung

Die Erfindung betrifft eine Vorrichtung zur insbesondere kontinuierlichen thermischen Behandlung einer Stärkesuspension, umfassend einen Behälter zur Bereitstellung der Stärkesuspension, eine an den Behälter anschließende Behandlungsstrecke zur thermischen Behandlung der Stärkesuspension und einen Vorratsbehälter zur temporären Lagerung der behandelten Stärkesuspension.

Des Weiteren betrifft die Erfindung ein Verfahren zur insbesondere kontinuierlichen thermischen Behandlung einer Stärkesuspension, wobei die Stärkesuspension in einem Behälter bereitgestellt wird, aus dem die Stärkesuspension abgeführt und entlang einer Behandlungsstrecke thermisch behandelt wird und wobei die so behandelte Stärkesuspension zu einem Vorratsbehälter geführt wird.

In verschiedenen Produktionsprozessen wird Stärke eingesetzt, wobei die Stärke aufgekocht oder einer anderen thermischen Behandlung unterworfen wird, beispielsweise um die Stärke zu verkleistern.

Dabei kann auch vorgesehen sein, dass einer Stärkesuspension ein Enzym beigemengt wird, das einen Abbau der Stärke ermöglicht und/oder beschleunigt. Beispielsweise werden mit Enzymen behandelte Stärkesuspensionen in der Papierindustrie eingesetzt, um daraus Stärkeleim zu erhalten. Hierfür wird eine Stärkesuspension erstellt, die für eine vorbestimmte Dauer mit einem Enzym behandelt wird. Anschließend ist es jedoch erforderlich, das Enzym wieder in einen unwirksamen Zustand zu überführen, ehe die gewonnene Stärkesuspension als Leim für Papierbahnen dienen kann. Hierzu wird die Stärkesuspension entlang einer Behandlungsstrecke mit Dampf beaufschlagt und anschließend entlang einer Verweilstrecke geführt, bevor die so behandelte Stärkesuspension einem Zyklon zur Abscheidung von Dampfschwaden zugeführt wird. Die Verweilstrecke ist längenmäßig so ausgelegt, dass das oder die Enzyme für einen weiteren Stärkeabbau unwirksam werden. Nach der Abscheidung von Dampf im Zyklon wird die Stärkesuspension anschließend in einem Vorratsbehälter für die weitere Verwendung gelagert.

Entlang der Verweilstrecke werden die Enzyme durch den injizierten Dampf und somit eine Temperaturerhöhung auf etwa 125 °C effektiv vernichtet. In der Folge ist es jedoch auch erforderlich, dass der Dampf mittels eines Zyklons entspannt wird, ehe die behandelte Stärkesuspension dem Vorratsbehälter zugeführt werden kann. Dies stellt im Einsatz eine Gefahrenquelle dar, wobei zudem das Risiko besteht, dass Stärkesuspension in die Umgebung austritt. Im Rahmen der Erfindung wurde jedoch erkannt, dass der Nachteil noch wesentlich wichtiger ist, dass mit dem Entspannen von Dampf hoher Temperatur letztlich auch dem System zugeführte Energie in die Umgebung abgelassen wird.

Aufgabe der Erfindung ist es, eine Vorrichtung und ein Verfahren der eingangs genannten Art anzugeben, wobei diese Nachteile beseitigt oder zumindest verringert sind.

Die auf die Vorrichtung bezogene Aufgabe der Erfindung wird gelöst, wenn bei einer Vorrichtung der eingangs genannten Art entlang der Behandlungsstrecke zumindest ein Wärmetauscher vorgesehen ist, durch den die Stärkesuspension vor der thermischen Behandlung durchführbar und nach der thermischen Behandlung unter Wärmeaustausch mit der nachfolgend durchgeführten Stärkesuspension zum Vorratsbehälter führbar ist.

Ein mit der Erfindung erzielter Vorteil ist insbesondere darin zu sehen, dass durch den vorgesehenen Wärmetauscher eine hohe Energieeffizienz erreicht wird. Die zugeführte Stärkesuspension, welche den Wärmetauscher durchläuft, wird durch die zum Vorratsbehälter laufende, bereits mit Dampf beaufschlagte und somit auf höherer Temperatur befindliche behandelte Stärkesuspension vorgewärmt, sodass ein geringerer Energieeintrag erforderlich ist, um die thermisch noch zu behandelnde Stärkesuspension auf eine gewünschte Temperatur zu bringen. Auf der anderen Seite wird die Temperatur der bereits behandelten Stärkesuspension verringert, sodass diese mit einer niedrigeren Temperatur zum Vorratsbehälter führbar ist. Dadurch ist auch das allenfalls erforderliche Entspannen von Dampf wesentlich entschärft.

Die erfindungsgemäße Vorrichtung kann bei beliebigen Prozessen eingesetzt werden, bei welchen eine Stärkesuspension thermisch zu behandeln ist. Thermische Behandlung bedeutet in diesem Zusammenhang, dass eine Temperatur der Stärkesuspension entlang der Behandlungsstrecke verändert wird oder sich z. B. durch Reaktionswärme ändert.

Insbesondere wenn die Stärkesuspension mit einem Enzym umgesetzt worden ist, kann entlang der Behandlungsstrecke nach dem Wärmetauscher eine Dampfeinrichtung zum Zuführen von Dampf in die Behandlungsstrecke vorgesehen sein, sodass das oder die zugesetzten Enzyme effektiv unwirksam gemacht werden können. Hierbei ist bevorzugt vorgesehen, dass nach der Dampfeinrichtung als Teil der Behandlungsstrecke eine Verweilstrecke vorgesehen ist, welche in den zumindest einen Wärmetauscher mündet. Eine Länge der Verweilstrecke ist dabei so bemessen, dass das oder die Enzyme nachhaltig vernichtet werden. Allerdings ist ein Einsatz nicht nur auf Verfahren beschränkt, in welchen Enzyme beteiligt sind. Vielmehr kann eine erfindungsgemäße Vorrichtung auch bei anderen Verfahren zur thermischen Behandlung einer Stärkesuspension eingesetzt werden, die mit einer Verweilstrecke arbeiten, da der Prozess weitgehend gleich abläuft. Unter anderem kann eine erfindungsgemäße Vorrichtung bei der thermischen Behandlung von kationischer Stärke bzw. Massenstärke zur Erhöhung einer Festigkeit eines Papiers, von Oberflächenstärke zur Veredelung einer Papieroberfläche oder von Streichstärke als Bindemittel für Streichfarben eingesetzt werden.

Der vorgesehene Behälter ist vorzugsweise als Dispergierbehälter ausgebildet, wobei dem Dispergierbehälter ein Silo zur Stärkelagerung vorgeschaltet ist. Aus dem Silo wird dem Dispergierbehälter, der in der Regel ein Rührwerk umfasst, reine Stärke zugeführt. Zusätzlich wird über einen gesonderten Einlass Wasser zugeführt, um zusammen mit der Stärke die Stärkesuspension zu bilden. Gegebenenfalls können auch Enzyme beigemengt werden.

Besonders bevorzugt ist es auch, dass entlang der Behandlungsstrecke ein Bypass vorgesehen ist, um die Stärkesuspension optional entlang der Behandlungsstrecke um den Wärmetauscher herumzuführen. Mit einem derartigen Bypass kann eine kontinuierliche thermische Behandlung der Stärkesuspension auch dann erreicht werden, wenn beispielsweise im Wärmetauscher Verblockungen auftreten, was Wartungsarbeiten nach sich ziehen kann. Bei einer Bypass-Operation ist zwar kurzzeitig die hohe Energieeffizienz eines erfindungsgemäßen Verfahrens nicht erreichbar, allerdings kann der Prozess ohne Unterbrechung und somit kontinuierlich weitergeführt werden, bis der Wärmetauscher wieder einsatzfähig ist.

Unabhängig von möglichen Wartungsarbeiten ermöglicht der Bypass aber darüber hinaus auch einen Betriebsmodus, bei dem durch Schalten von Ventilen bzw. teilweises Öffnen des Bypasses ein Hauptfluss über den zumindest einen Wärmetauscher läuft, aber ein Nebenfluss über den Bypass. Dadurch können bei gegebener Temperaturüberwachung Temperaturniveaus exakt durch variable Zuschaltung des Bypasses und Steuerung des über diesen geleiteten Nebenflusses eingestellt werden. Gegebenenfalls ist es dabei auch möglich, dass der Hauptfluss über den Bypass läuft.

Als Wärmetauscher kommen beliebige Wärmetauscher zum Einsatz, wie diese aus dem Stand der Technik bekannt sind. Beispielsweise kann es sich um einen plattenförmigen Wärmetauscher handeln, durchaus aber auch um einen Wärmetauscher in Spiralform. Es können auch mehrere Wärmetauscher eingesetzt werden.

Die verfahrensmäßige Aufgabe der Erfindung wird gelöst, wenn bei einem Verfahren der eingangs genannten Art die Stärkesuspension vor der thermischen Behandlung entlang der Behandlungsstrecke zumindest durch einen Wärmetauscher durchgeführt und nach der thermischen Behandlung durch den Wärmetauscher unter Wärmetausch mit der nachfolgend der thermischen Behandlung zugeführten Stärkesuspension zum Vorratsbehälter weitergeführt wird.

Ein mit einem erfindungsgemäßen Verfahren erzielter Vorteil ist insbesondere darin zu sehen, dass ein sehr energieeffizientes Verfahren zur Behandlung einer Stärkesuspension unter thermischer Beaufschlagung zur Verfügung gestellt wird. Durch den vorgesehenen Wärmetausch kann derart viel Energie eingespart werden, dass sich eine entsprechende Mehrausstattung einer hierfür erforderlichen Einrichtung in kurzer Zeit amortisiert. Dabei hat sich gezeigt, dass mögliche Probleme wie ein Nichtfunktionieren des Wärmetauschers aufgrund der Viskosität der Stärkesuspension, ein zu hoher Gegendruck durch den Wärmetauscher oder eine zu hohe Energieeffizienz, sodass letztlich Stärke im Vorratsbehälter für einen weiteren Einsatz auf einer zu niedrigen Temperatur ist, ohne Weiteres überwunden werden können bzw. nicht auftreten.

Insbesondere wenn Enzyme zur Behandlung der Stärkesuspension vorgesehen sind, erweist es sich als zweckmäßig, dass entlang der Behandlungsstrecke nach dem Wärmetauscher mit einer Dampfeinrichtung Dampf in die Behandlungsstrecke eingeführt wird. Dadurch können eingesetzte Enzyme unwirksam gemacht werden. Hierfür ist es ferner zweckmäßig, wenn die Stärkesuspension nach der Dampfeinrichtung durch eine Verweilstrecke und anschließend in den zumindest einen Wärmetauscher geführt wird. Eine Länge der Verweilstrecke ist dabei so bemessen, dass nach der Temperaturerhöhung durch Zuführen des Dampfes die Enzyme entlang der Verweilstrecke nachhaltig unwirksam gemacht werden.

Es kann auch vorgesehen sein, dass die Stärke zur Bildung der Stärkesuspension mit Wasser beaufschlagt wird, wobei die Stärke aus einem Silo zur Stärkelagerung zugeführt wird.

Es kann des Weiteren auch vorgesehen sein, dass die Stärkesuspension entlang der Behandlungsstrecke optional über einen Bypass geführt wird, um die Stärkesuspension entlang der Behandlungsstrecke um den Wärmetauscher herumzuführen. Dies kann insbesondere dann erforderlich sein, wenn eine Temperatur im Vorratsbehälter zu niedrig oder ein Druck im System zu hoch ist. Dadurch lässt sich auf relativ einfache Weise sicherstellen, dass das Verfahren auch dann kontinuierlich betreibbar ist, wenn z. B. aufgrund einer Druckerhöhung wegen einer Verblockung im Wärmetauscher ein weiterer Betrieb über denselben nicht möglich ist. Analoges trifft zu, wenn eine Temperatur im Vorratsbehälter beispielsweise unter 85 °C absinkt, was insbesondere bei der Verwendung der behandelten Stärkesuspension in der Papierindustrie nicht erwünscht ist, weil dann eine Viskosität zu hoch werden würde. Das Verfahren kann dann so geführt werden, dass zur Temperatureinstellung partiell über den Bypass gefahren wird.

Weitere Merkmale, Vorteile und Wirkungen der Erfindung ergeben sich aus dem nachfolgend dargestellten Ausführungsbeispiel. In den Zeichnungen, auf welche darauf Bezug genommen wird, zeigen:
- Fig. 1: eine erfindungsgemäße Vorrichtung in einem ersten Betriebszustand;
- Fig. 2: eine erfindungsgemäße Vorrichtung in einem zweiten Betriebszustand;
- Fig. 3: eine erfindungsgemäße Vorrichtung in einem dritten Betriebszustand.

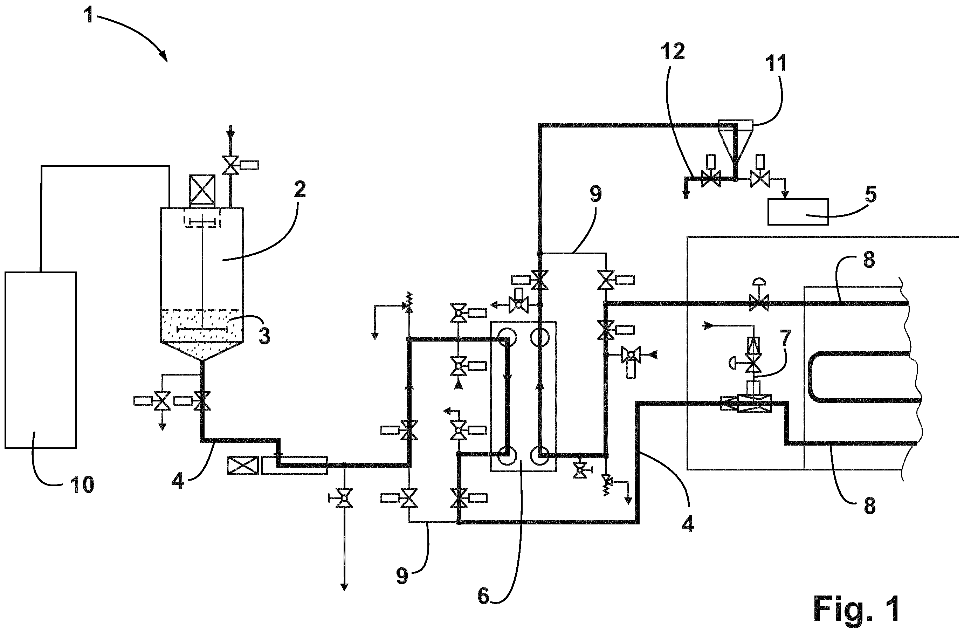

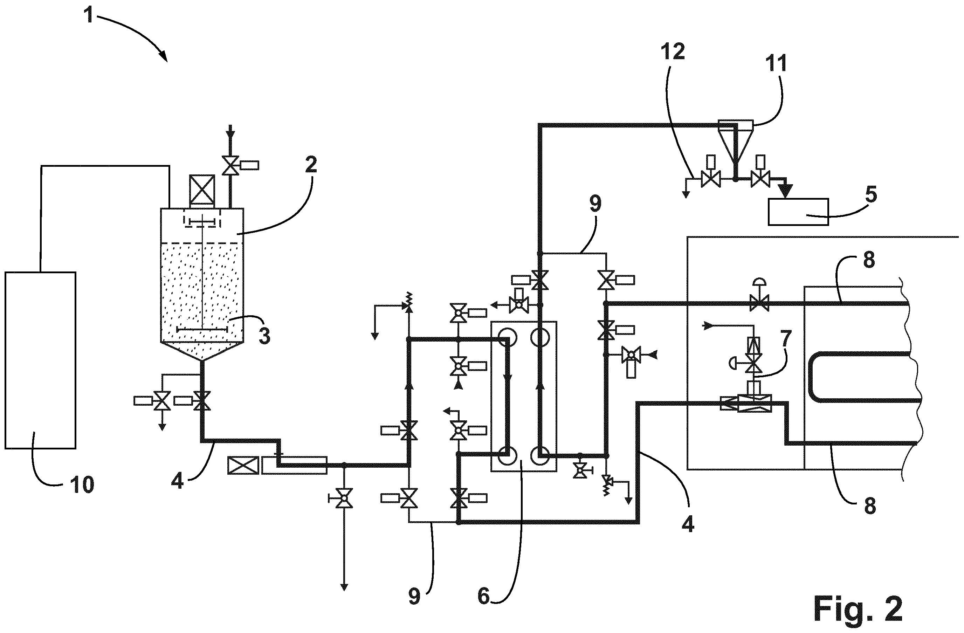

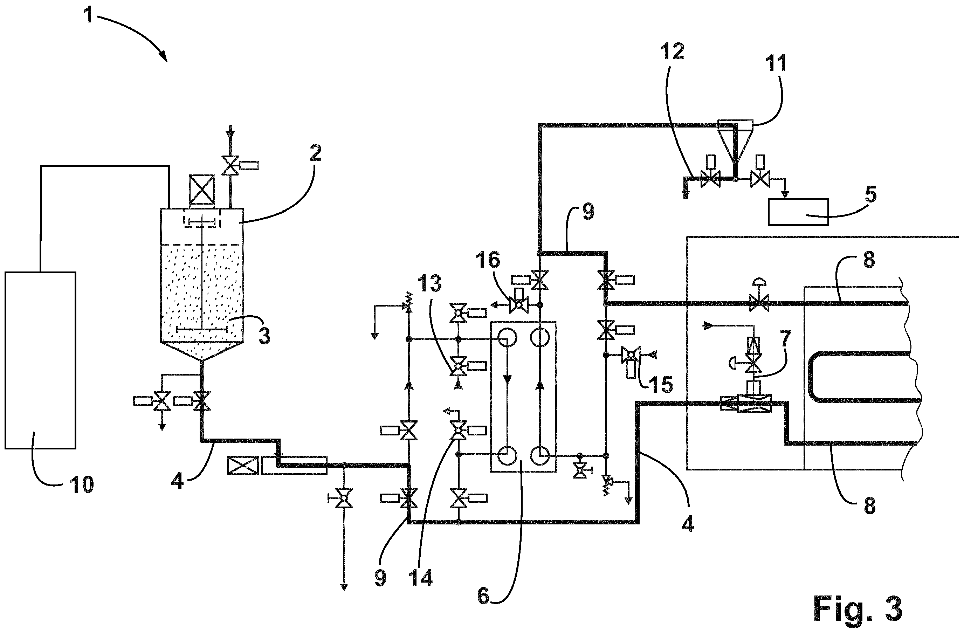

In Fig. 1 ist eine erfindungsgemäße Vorrichtung 1 dargestellt, wobei sich die Darstellung auf ein Anfahren der Vorrichtung 1 bezieht. Die erfindungsgemäße Vorrichtung 1 umfasst einen Behälter 2 mit einem nicht näher dargestellten Einlass zur Zuführung von Stärke aus einem Silo 10 zum Behälter 2. Hierfür wird mit einer Schnecke aus dem Silo 10 Stärke in den Behälter 2 gefördert und mit Wasser vermengt. Die so erstellte Stärkesuspension 3 wird entlang einer Behandlungsstrecke 4 mit einem Wärmetauscher 6 geführt. Wie auch in Fig. 2 und 3 ist ein Fluss der Stärkesuspension 3 stromabwärts durch eine stärkere Linie hervorgehoben. Bereits beim Anfahren der Vorrichtung 1 wird die Stärkesuspension 3 über den Wärmetauscher 6 geführt. An den Wärmetauscher 6 schließt ein Teil der Behandlungsstrecke 4 an, in welcher eine Dampfeinrichtung 7 vorgesehen ist, mit welcher Dampf in die Behandlungsstrecke 4 einführbar ist. Durch die Dampfeinrichtung 7 und das Einführen von Dampf in die Behandlungsstrecke 4 können die Enzyme durch Temperaturerhöhung unwirksam gemacht werden. Eine als Teil der Behandlungsstrecke 4 ausgebildete Verweilstrecke 8 ist dabei so lang, dass die Enzyme tatsächlich nachhaltig unwirksam gemacht werden oder in einem anderen Verfahren die Stärkesuspension 3 auf eine gewünschte Temperatur aufgekocht und auf dieser gehalten wird. Hierfür ist vorgesehen, dass der Dampf mit einer Temperatur von etwa 125 °C in die Behandlungsstrecke 4 eingeführt wird. Der Kreislauf ist dabei so ausgebildet, dass die Stärkesuspension 3 nach Durchlaufen der nur angedeuteten Verweilstrecke 8 in den Wärmetauscher 6 rückgeführt wird, wobei ein Wärmetausch mit der kontinuierlich zugeführten, aber noch auf geringerer Temperatur befindlichen Stärkesuspension 3 erfolgt.

Die Stärkesuspension 3, welche der Verweilstrecke 8 zugeführt wird, tritt in den Wärmetauscher 6 mit einer Temperatur von etwa 80 °C ein, wird aber durch den Wärmetausch mit der bereits behandelten Stärkesuspension 3 auf eine Temperatur von 105 °C erwärmt. Dadurch hat die Stärkesuspension 3 bereits eine höhere Temperatur, sodass weniger Dampf erforderlich ist, um diese auf eine gewünschte Temperatur von etwa 125 °C zu bringen. Darüber hinaus wird die bereits behandelte Stärkesuspension 3 nach Durchlaufen des Wärmetauschers 6 auf eine Temperatur von etwa 100 °C abgekühlt, sodass eine Dampfentspannung in einem Zyklon 11 unproblematisch bzw. ohne Sicherheitsrisiko ist. Da bei anderen Verfahren der Verweilstrecke 8 auch eine Stärkesuspension 3 mit Raumtemperatur zugeführt wird und ebenfalls ein Aufkochen auf etwa 125 °C erfolgt, eignet sich die Vorrichtung 1 auch für derartige Verfahren, da auch bei diesen ein Wärmetausch zweckmäßig ist.

Beim Anfahren der Vorrichtung 1 gemäß Fig. 1 wird zeitgesteuert über eine Abfallleitung 12 gespült. Sobald die Vorrichtung 1 genügend gespült ist, wird gemäß Fig. 2 die über den Zyklon 11 geführte Stärkesuspension 3 einem Vorratsbehälter 5 zugeführt, in welchem eine Temperatur von etwa 85 °C gehalten wird. Die in dem Vorratsbehälter 5 gelagerte Stärkesuspension 3 wird anschließend für eine weitere Produktion verwendet wird.

Ist eine Temperatur im Vorratsbehälter 5 zu niedrig oder ein durch den Wärmetauscher 6 beispielsweise aufgrund von Verblockungen aufgebauter Gegendruck zu hoch, kann über einen Bypass 9 das Verfahren weiter betrieben werden. Dies ist in Fig. 3 dargestellt. Durch Schaltung der entsprechenden Ventile wird der Wärmetauscher 6 umgangen, sodass selbst bei auftretenden Problemen nach wie vor ein kontinuierlicher Betrieb möglich ist. Gleichzeitig ist der Wärmetauscher 6 über Ventile 13, 14, 15, 16 und zugehörige Leitungen zugänglich, sodass beispielsweise bei laufendem Betrieb eine Spülung des Wärmetauschers 6 zur Lösung einer Verblockung erfolgen kann. Sobald die Probleme behoben sind, kann wieder auf den Normalbetrieb mit Durchlaufen der Behandlungsstrecke 4 über den Wärmetauscher 6 erfolgen.

Möglich ist es auch, dass der Bypass 9 nur partiell zugeschaltet wird, was über vorgesehene Ventile möglich ist. Dadurch kann durch Abstimmung eines Flusses durch den Wärmetauscher 6 und durch den Bypass 9 eine Temperatur reguliert werden.

Insgesamt ergibt sich somit ein hoch energieeffizientes Verfahren, das auch bei auftretenden Problemen kontinuierlich weitergeführt werden kann, ohne dass ein Abfahren der Vorrichtung 1 erforderlich ist.

Der Wärmetauscher 6 ist im Ausführungsbeispiel zwischen dem Behälter 2 und dem Vorratsbehälter 5 angeordnet. Es kann aber auch vorgesehen sein, dass der Wärmetauscher 6 zwischen dem Silo 10 und dem Vorratsbehälter 5 angeordnet ist, wenn die Behandlungsstrecke 4 entsprechend ausgelegt ist. Möglich ist es selbstverständlich auch, dass je nach Verlauf der Behandlungsstrecke 4 auch mehrere Wärmetauscher 4 vorgesehen sind. Darüber hinaus kann eine erfindungsgemäße Vorrichtung 1 auch dann eingesetzt werden, wenn Stärkesuspensionen ausgehend von einem anderen Temperaturniveau thermisch zu behandeln sind, z. B. ausgehend von Raumtemperatur bzw. etwa 25 °C, oder auch bei Prozessen, die ohne Enzyme arbeiten.

## Patentansprüche

1. Vorrichtung (1) zur insbesondere kontinuierlichen thermischen Behandlung einer Stärkesuspension (3), umfassend einen Behälter (2) zur Bereitstellung der Stärkesuspension (3), eine an den Behälter (2) anschließende Behandlungsstrecke (4) zur thermischen Behandlung der Stärkesuspension (3) und einen Vorratsbehälter (5) zur temporären Lagerung der behandelten Stärkesuspension (3), **dadurch gekennzeichnet, dass** entlang der Behandlungsstrecke (4) zumindest ein Wärmetauscher (6) vorgesehen ist, durch den die Stärkesuspension (3) vor der thermischen Behandlung durchführbar und nach der thermischen Behandlung unter Wärmeaustausch mit der nachfolgend durchgeführten Stärkesuspension (3) zum Vorratsbehälter (5) führbar ist.

2. Vorrichtung (1) nach Anspruch 1, **dadurch gekennzeichnet, dass** entlang der Behandlungsstrecke (4) nach dem Wärmetauscher (6) eine Dampfeinrichtung (7) zum Zuführen von Dampf in die Behandlungsstrecke (4) vorgesehen ist.

3. Vorrichtung (1) nach Anspruch 2, **dadurch gekennzeichnet, dass** nach der Dampfeinrichtung (7) als Teil der Behandlungsstrecke (4) eine Verweilstrecke (8) vorgesehen ist, welche in den zumindest einen Wärmetauscher (6) mündet.

4. Vorrichtung (1) nach einem der Ansprüche 1 bis 3, **dadurch gekennzeichnet, dass** der Behälter (2) als Dispergierbehälter ausgebildet ist und dem Dispergierbehälter (2) ein Silo (10) zur Stärkelagerung vorgeschaltet ist.

5. Vorrichtung (1) nach einem der Ansprüche 1 bis 4, **dadurch gekennzeichnet, dass** entlang der Behandlungsstrecke (4) ein Bypass (9) vorgesehen ist, um die Stärkesuspension (3) optional entlang der Behandlungsstrecke (4) um den Wärmetauscher (6) herumzuführen.

6. Verfahren zur insbesondere kontinuierlichen thermischen Behandlung einer Stärkesuspension (3), wobei die Stärkesuspension (3) in einem Behälter (2) bereitgestellt wird, aus dem die Stärkesuspension (3) abgeführt und entlang einer Behandlungsstrecke (4) thermisch behandelt wird und wobei die so behandelte Stärkesuspension (3) zu einem Vorratsbehälter (5) geführt wird, **dadurch gekennzeichnet, dass** die Stärkesuspension (3) vor der thermischen Behandlung entlang der Behandlungsstrecke (4) zumindest durch einen Wärmetauscher (6) durchgeführt und nach der thermischen Behandlung durch den Wärmetauscher (6) unter Wärmetausch mit der nachfolgend der thermischen Behandlung zugeführten Stärkesuspension (3) zum Vorratsbehälter (5) weitergeführt wird.

7. Verfahren nach Anspruch 6, **dadurch gekennzeichnet, dass** entlang der Behandlungstrecke (4) nach dem Wärmetauscher (6) mit einer Dampfeinrichtung (7) Dampf in die Behandlungsstrecke (4) eingeführt wird.

8. Verfahren nach Anspruch 7, **dadurch gekennzeichnet, dass** die Stärkesuspension (3) nach der Dampfeinrichtung (7) durch eine Verweilstrecke (8) und anschließend in den zumindest einen Wärmetauscher (6) geführt wird.

9. Verfahren nach einem der Ansprüche 6 bis 8, **dadurch gekennzeichnet, dass** die Stärke zur Bildung der Stärkesuspension (3) mit Wasser beaufschlagt wird, wobei die Stärke aus einem Silo (10) zur Stärkelagerung zugeführt wird.

10. Verfahren nach einem der Ansprüche 6 bis 9, **dadurch gekennzeichnet, dass** die Stärkesuspension (3) entlang der Behandlungsstrecke (4) optional über einen Bypass (9) geführt wird, um die Stärkesuspension (3) entlang der Behandlungsstrecke (4) um den Wärmetauscher (6) herumzuführen.

## Claims

1. A device (1) for the thermal treatment, in particular continuous, of a starch suspension (3), comprising a container (2) for preparing the starch suspension (3), a treatment section (4) adjacent to the container (2) for the thermal treatment of the starch suspension (3) and a holding tank (5) for the temporary storage of the treated starch suspension (3), **characterized in that** at least one heat exchanger (6) is provided along the treatment section (4), through which the starch suspension (3) can be passed prior to the thermal treatment and through which it can be conducted to the holding tank (5) after the thermal treatment, exchanging heat with starch suspension (3) which is subsequently passed through.

2. The device (1) as claimed in claim 1, **characterized in that** steam equipment (7) is provided along the treatment section (4) after the heat exchanger (6) for supplying steam to the treatment section (4).

3. The device (1) as claimed in claim 2, **characterized in that** a dwell section (8) which discharges into the at least one heat exchanger (6) is provided downstream of the steam equipment (7) as part of the treatment section (4).

4. The device (1) as claimed in one of claims 1 to 3, **characterized in that** the container (2) is configured as a dispersing vessel and a silo (10) for storing starch is connected upstream of the dispersing vessel (2).

5. The device (1) as claimed in one of claims 1 to 4, **characterized in that** a bypass (9) is provided along the treatment section (4) in order to optionally guide the starch suspension (3) along the treatment section (4), around the heat exchanger (6).

6. A method for the thermal treatment, in particular continuous, of a starch suspension (3), wherein the starch suspension (3) is prepared in a container (2), from which the starch suspension (3) is conducted out and is thermally treated along a treatment section (4) and wherein the starch suspension (3) treated thereby is conducted to a holding tank (5), **characterized in that** the starch suspension (3) is passed through at least one heat exchanger (6) prior to the thermal treatment along the treatment section (4) and after the thermal treatment is conducted again through the heat exchanger (6) to the holding tank (5), exchanging heat with starch suspension (3) which is subsequently supplied for thermal treatment.

7. The method as claimed in claim 6, **characterized in that** steam is introduced into the treatment section (4) along the treatment section (4) downstream of the heat exchanger (6) by means of steam equipment (7).

8. The method as claimed in claim 7, **characterized in that** downstream of the steam means (7), the starch suspension (3) is guided through a dwell section (8) and subsequently into the at least one heat exchanger (6).

9. The method as claimed in one of claims 6 to 8, **characterized in that** water is added to the starch in order to form the starch suspension (3), wherein the starch is supplied from a silo (10) for storing starch.

10. The method as claimed in one of claims 6 to 9, **characterized in that** the starch suspension (3) is optionally guided along the treatment section (4) via a bypass (9) in order to pass the starch suspension (3) along the treatment section (4) around the heat exchanger (6).

## Revendications

1. Dispositif (1) de traitement thermique, en particulier continu, d'une suspension d'amidon (3), comprenant un récipient (2) pour la mise à disposition de la suspension d'amidon (3), un segment de traitement (4) se raccordant au récipient (2) pour le traitement thermique de la suspension d'amidon (3) et un réservoir de réserve (5) pour le stockage temporaire de la suspension d'amidon traitée (3), **caractérisé en ce que**, le long du segment de traitement (4), il est prévu au moins un échangeur de chaleur (6) à travers lequel la suspension d'amidon (3) peut passer avant le traitement thermique et peut être guidée après le traitement thermique sous échange de chaleur avec la suspension d'amidon transitant ensuite (3) vers le réservoir de réserve (5).

2. Dispositif (1) selon la revendication 1, **caractérisé en ce que**, le long du segment de traitement (4), en aval de l'échangeur de chaleur (6), il est prévu un système de vapeur (7) pour acheminer de la vapeur dans le segment de traitement (4).

3. Dispositif (1) selon la revendication 2, **caractérisé en ce que**, en aval du système de vapeur (7), faisant partie du segment de traitement (4), il est prévu un segment de stationnement (8) qui débouche dans l'au moins un échangeur de chaleur (6).

4. Dispositif (1) selon une des revendications 1 à 3, **caractérisé en ce que** le récipient (2) se présente sous forme d'un récipient de dispersion et qu'un silo (10) permettant de stocker l'amidon est installé en amont du récipient de dispersion (2).

5. Dispositif (1) selon une des revendications 1 à 4, **caractérisé en ce que**, le long du segment de traitement (4), il est prévu une dérivation (9) pour guider la suspension d'amidon (3) en option le long du segment de traitement (4) autour de l'échangeur de chaleur (6).

6. Procédé de traitement thermique, en particulier continu, d'une suspension d'amidon (3), dans lequel la suspension d'amidon (3) est mise à disposition dans un récipient (2) depuis lequel la suspension d'amidon (3) est évacuée et traitée thermiquement le long d'un segment de traitement (4) et la suspension d'amidon ainsi traitée (3) est d'abord conduite vers un réservoir de réserve (5), **caractérisé en ce que** la suspension d'amidon (3), avant le traitement thermique, transite le long du segment de traitement (4) au moins à travers l'échangeur de chaleur (6) et, après le traitement thermique, est conduite plus loin à travers l'échangeur de chaleur (6) sous échange de chaleur avec la suspension d'amidon (3) acheminée ensuite le traitement thermique vers le réservoir de réserve (5).

7. Procédé selon la revendication 6, **caractérisé en ce que**, le long du segment de traitement (4), en aval de l'échangeur de chaleur (6), de la vapeur est introduite dans le segment de traitement (4) à l'aide d'un système de vapeur (7).

8. Procédé selon la revendication 7, **caractérisé en ce que** la suspension d'amidon (3), en aval du système de vapeur (7), est conduite à travers un segment de stationnement (8) puis dans l'au moins un échangeur de chaleur (6).

9. Procédé selon une des revendications 6 à 8, **caractérisé en ce que** l'amidon, pour former la suspension d'amidon (3), est sollicité avec de l'eau, l'amidon étant acheminé depuis un silo (10) servant à stocker l'amidon.

10. Procédé selon une des revendications 6 à 9, **caractérisé en ce que** la suspension d'amidon (3), le long du segment de traitement (4), est conduite en option par une dérivation (9) pour guider la suspension d'amidon (3) le long du segment de traitement (4) autour de l'échangeur de chaleur (6).
